# EUROPÄISCHE PATENTSCHRIFT

(11) **EP 1 403 103 B1**
(45) Veröffentlichungstag und Bekanntmachung des Hinweises auf die Patenterteilung: **22.08.2007**
(21) Anmeldenummer: 03014906.6
(22) Anmeldetag: 01.07.2003
(51) Int. Cl.: B60G 17/027

(54) **Verstellbares Federbein für Kraftfahrzeuge**
Adjustable suspension strut for motor vehicles
Jambe de suspension réglable pour véhicules automobiles

(30) Priorität: 28.09.2002 DE 10245362
(43) Veröffentlichungstag der Anmeldung: 31.03.2004
(73) Patentinhaber: Dr.Ing. h.c. F. Porsche Aktiengesellschaft, 70435 Stuttgart (DE)
(72) Erfinder: Dietz, Matthias, 74321 Bietigheim-Bissingen (DE); Luger, Martin, 71287 Weissach (DE)

(56) Entgegenhaltungen:
- DE-A1- 19 529 580
- DE-A1- 19 830 922
- US-A- 4 530 489
- US-A- 5 401 053

## Beschreibung

Die Erfindung betrifft ein verstellbares Federbein für Kraftfahrzeuge bestehend aus einem Schwingungsdämpfer und einem mit dem Schwingungsdämpfer verbundenen Federelement. Das Federbein erstreckt sich zwischen zwei Anlenkpunkten. Am ersten Anlenkpunkt sind der Schwingungsdämpfer und das Federelement gemeinsam abgestützt. Am zweiten Anlenkpunkt ist nur der Schwingungsdämpfer direkt abgestützt, während sich das Federelement über den Schwingungsdämpfer und eine mittels einer Verstellvorrichtung verschiebbaren Federauflage nur indirekt am zweiten Anlenkpunkt abstützt.

Ein derartiges verstellbares Federbein für Kraftfahrzeuge ist aus der DE 195 29 580 C2 bekannt geworden.

Ausgehend von diesem Stand der Technik ist es Aufgabe der Erfindung, ein verstellbares Federbein für Kraftfahrzeuge zu schaffen, das hinsichtlich der Betriebssicherheit verbessert ist.

Diese Aufgabe wird erfindungsgemäß mit den Merkmalen des Patentanspruches 1 gelöst. Erfindungsgemäß wird vorgeschlagen, bei einem gattungsgemäßen verstellbaren Federbein einen mit der verschiebbaren Federauflage verbundenen Anschlag vorzusehen, der bei einer Einfederbewegung an einem am ersten Anlenkpunkt vorgesehenen Anschlag zur Anlage kommt. Durch die Erfindung ist die Betriebssicherheit dadurch erhöht, daß durch den Anschlag ein auf Block gehen des Federelementes, bei dem die Federwindungen aneinander zu liegen kommen, verhindert ist. Federn, wie sie bei Federbeinen für Kraftfahrzeuge üblicherweise verwendet sind, sind nicht dafür ausgelegt, auf Block zu gehen und es besteht die Gefahr, dass sie hierbei beschädigt werden. Bei nicht verstellbaren Federbeinen ist daher ein Anschlagpuffer vorgesehen, der ein vollständiges Zusammenschieben des Federelementes verhindert. Dieser Anschlagpuffer stützt sich bei einem solchen nicht verstellbaren Federbein an einem Deckel eines Zylindergehäuses des Stoßdämpfers ab. Bei einem verstellbaren Federbein aber wird dieser Anschlagpuffer dann unwirksam, wenn die Federauflage und damit der Fußpunkt des Federelementes aus seiner Konstruktionslage im Sinne einer Vorspannung des Federelementes herausbewegt wird. Selbstverständlich kann der aus dem Stand der Technik allgemein bekannte Anschlagpuffer auch in Verbindung mit dem erfindungsgemäßen bewegbaren Anschlag verwendet werden.

In Konstruktionslage liegt der erfindungsgemäße Anschlag beispielsweise auf einem Gehäuse des Stoßdämpfers auf. Wenn sich der erfindungsgemäße Anschlag auf der Federauflage abstützt, wird bei einer Verschiebung der Federauflage im Sinne einer Vorspannung des Federelementes der Anschlag von der Federauflage mitgenommen und verkürzt damit in dem Maße den möglichen Einfederweg, in dem auch das Federelement durch die Bewegung der Federauflage verkürzt wird. Bei einer Bewegung der Federauflage im Sinne einer Entspannung des Federelemtes hingegen bleibt die erfindungsgemäße Auflage auf dem Stoßdämpfergehäuse liegen und der zur Verfügung stehende Einfederweg wird nicht verändert.

Vorteilhafte Weiterbildungen der Erfindung sind Bestandteil der Unteransprüche.

So wird vorgeschlagen, einen bei der Radaufhängung des Fahrzeuges verwendeten Stabilisator an der Federauflage anzubinden. Äquivalent ist es auch möglich, den Stabilisator am bewegten Teil der Stellvorrichtung angreifen zu lassen. Durch diese Anbindung werden bei einer Verwendung des erfindungsgemäßen Federbeins für einen Wankausgleich des Kraftfahrzeuges gleichzeitig das Federelement und der Stabilisator betätigt und unterstützen sich auf diese Weise gegenseitig. Durch diese Maßnahme ist der für den Wankausgleich benötigte Verstellweg der Federauflage geringer und auch der zum Verstellen der Federauflage benötigte Energieaufwand sinkt. Zusammen mit dem Energieaufwand sinken auch Kosten und Gewicht der Energieversorgung.

In weiterer Fortbildung der Erfindung wird vorgeschlagen, zwischen dem Stellelement und dem Anschlag ein zusätzliches Federelement vorzusehen, das so ausgelegt ist, daß es in Konstruktionslage des Federbeines auf Block liegt oder in anderer Weise nicht wirksam ist. Dieses zusätzliche Federelement ist ein Ausfedern des Federbeines über den Bewegungsbereich des ersten Federelementes hinaus möglich, was insbesondere bei Geländefahrt und starker Verschränkung der Räder des Kraftfahrzeuges von Vorteil ist.

Die Erfindung ist nachstehend anhand des in den Figuren dargestellten Ausführungsbeispieles näher beschrieben.

Es zeigen:
- Fig. 1: einen Hauptschnitt durch ein erfindungsgemäßes Federbein im ausgefederten Zustand mit leichter Verstellung der Federauflage im Sinne einer Vorspannung des ersten Federelementes,
- Fig. 2: einen Schnitt durch das Federbein nach Fig. 1 im leicht angefederten Zustand, wobei sich die Federauflage in Konstruktionslage befindet,
- Fig. 3: einen Hauptschnitt nach Fig. 1, wobei sich die Federauflage in ihrer höchsten Stellung im Sinne einer Vorspannung des ersten Federelementes befindet und das Federbein gleichzeitig vollständig eingefedert ist,
- Fig. 4: ein Schaltbild zur Ansteuerung der Stellvorrichtungen für die verstellbaren Federbeine eines Kraftfahrzeuges, und
- Fig. 5: einen Hauptschnitt durch eine alternative Bauform des Federbeins mit einer Anbindung eines Stabilisators.

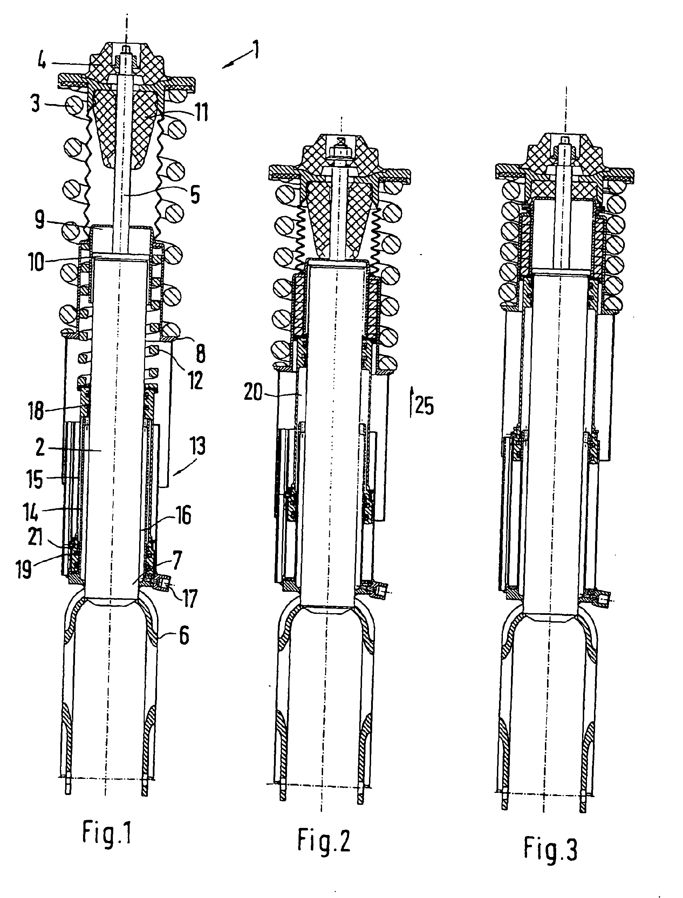

Das in Fig. 1 gezeigte verstellbare Federbein 1 besteht aus einem Schwingungsdämpfer 2 und einem ersten Federelement 3. Ein erster Anschlagpunkt ist als Stützlager 4 ausgeführt, an dem sowohl eine Kolbenstange 5 des Stoßdämpfers 2 und das erste Federelement 3 angreifen. Der zweite Anlenkpunkt 6 ist hier gabelförmig ausgeführt und mit dem unteren Ende eines Gehäuses 7 des Stoßdämpfers 2 verbunden. Auf dem Gehäuse 7 ist eine Federauflage 8 geführt, auf der sich das Federelement 3 fußseitig abstützt. Die Federauflage 8 ist topfförmig ausgeführt und nimmt an ihrem oberen, dem Stützlager 4 zugewandten Ende einen Anschlagtopf 9 auf, der so gestaltet ist, daß er in Konstruktionslage (vgl. Fig. 2) auf einem oberen Deckel 10 des Gehäuses 7 aufliegt. Der topfförmige Anschlag 9 weist eine zentrale Öffnung auf, durch die die Kolbenstange 5 hindurchtritt. Zwischen dem Anschlag 9 und dem Stützlager 4 ist auf der Kolbenstange 5 ein Anschlagpuffer 11 angeordnet, der zusammen mit dem Anschlag 9 eine progressiv wirkende Begrenzung der Einfederung des Federbeines 1 bewirkt:

In Fig. 2 ist dargestellt, wie sich der Anschlagpuffer 1 an den Anschlag 9 anlegt.

Fig. 3 zeigt den Endanschlag, bei dem der Anschlagpuffer 11 durch die Bewegung des Anschlages 9 maximal verformt ist, so daß keine weitere Einfederung mehr möglich ist.

Der Federteller 8 stützt sich unter Zwischenschaltung eines zweiten Federelementes, hier einer Blockfeder 12, auf einer Verstellvorrichtung 13 ab. Diese Verstellvorrichtung 13 ist auf dem Gehäuse 7 des Stoßdämpfers 2 befestigt und besteht im wesentlichen aus einer Stützhülse 14 und einem Aktuator 15. Die Stützhülse 14 bildet zusammen mit der Außenfläche des Gehäuses 7 einen zylindrischen Kanal 16 zur Führung eines Hydraulikfluids, das dem Kanal 16 durch einen Hydraulikanschluß 17 zugeführt wird. Der Aktuator 15 ist über ein erstes Dichtungselement 18 auf der Außenfläche des Gehäuses 7 und über einen zweiten Dichtungssatz 19 auf der Außenfläche der Stützhülse 14 geführt. Durch die Stützhülse 14 ergibt sich insgesamt ein gestufter Zylinderraum 20 (vgl. Fig. 2), der bewirkt, daß sich der Aktuator 15 bei Zufuhr von Hydraulikfluid über den Kanal 16 in Pfeilrichtung 25 bewegt und hierbei die Vorspannung des ersten Federelementes 3 erhöht. An der Verstellvorrichtung 13 ist schließlich ein Wegsensor 21 vorgesehen, der die Stellung des Aktuators 15 in Bezug auf die Stützhülse 14 bestimmt.

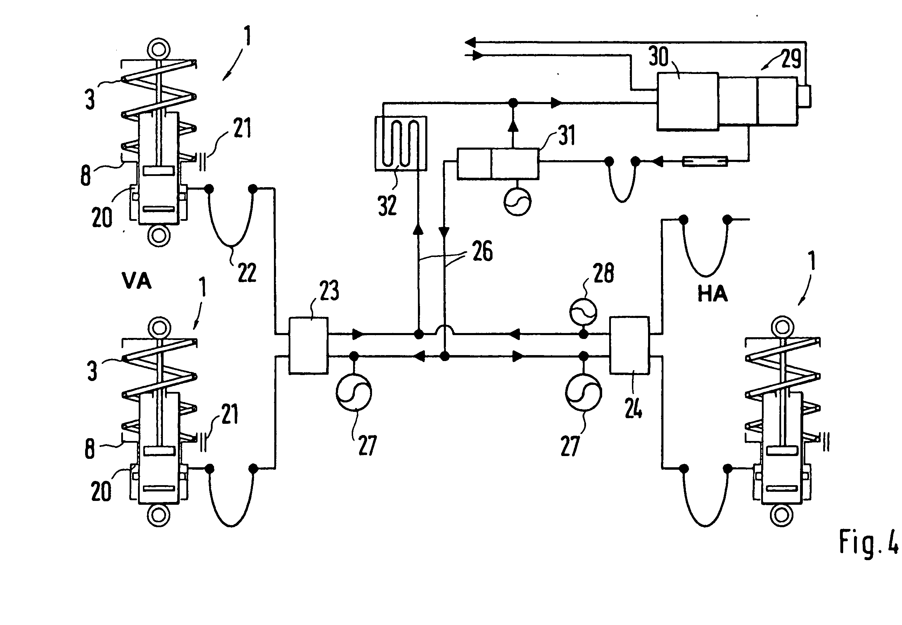

Fig. 4 zeigt in einem Schaltplan die Ansteuerung von vier Federbeinen 1 in einem Kraftfahrzeug. An einer Vorderachse VA sind ebenso wie an einer Hinterachse HA verstellbare Federbeine 1 vorgesehen. Zur Vereinfachung ist hier gegenüber der Darstellung in Fig. 1 das zweite Federelement 12 nicht dargestellt. Die Hydraulikanschlüsse 17 der Federbeine 1 sind jeweils über eine Schlauchleitung 22 mit einem ersten Ventilblock 23 für die Vorderachse bzw. einem zweiten Ventilblock 24 für die Hinterachse verbunden. In den zu den Ventilblöcken 23, 24 führenden Hydraulikleitungen 26 sind Druckspeicher 27 bzw. ein Rücklaufspeicher 28 vorgesehen. Eine Pumpe 29 setzt das aus einem Behälter 30 geförderte Hydraulikfluid unter Druck und führt es über eine Druckregeleinheit 31 den Ventilblöcken 23, 24 zu. Von den Ventilblöcken 23, 24 aus wird das Hydraulikfluid über einen Kühler 32 in den Behälter 30 zurückgeführt.

Durch Ansteuerung der Ventilblöcke 23, 24 können die Federauflagen 8 und damit die Fußpunkte der Federn 3 einzeln in ihrer Höhenlage verstellt werden. Durch diese Verstellung kann beispielsweise
- die Seitenneigung des Kraftfahrzeuges ausgeglichen werden, indem die Federbeine 1 einer Fahrzeugseite gleichsinnig angesteuert werden;
- kann ein Nickwinkel des Kraftfahrzeuges ausgeglichen werden, indem die Federbeine 1 der Vorderachse bzw. der Hinterachse gleichsinnig angesteuert werden;
- können langwellige Fahrbahnunebenheiten ausgeglichen werden, indem die Federbeine 1 abhängig von einer Beschleunigung des Kraftfahrzeuges in Hochrichtung angesteuert werden;
- kann die Bodenfreiheit des Fahrzeuges durch gleichsinnige Ansteuerung aller Federbeine 1 verstellt werden;
- kann eine Zuladung des Kraftfahrzeuges ausgeglichen werden, indem im Stillstand des Fahrzeuges die Federbeine 1 so angesteuert werden, daß alle Wegsensoren 21 dasselbe Signal abgeben,
- kann die Geländegängigkeit des Kraftfahrzeuges verbessert werden, weil ein Verschränken einer Achse (z.B. Vorderachse VA) dadurch ermöglicht wird, daß die beiden Federbeine 1 der einen Achse gegensinnig zueinander verstellt werden.

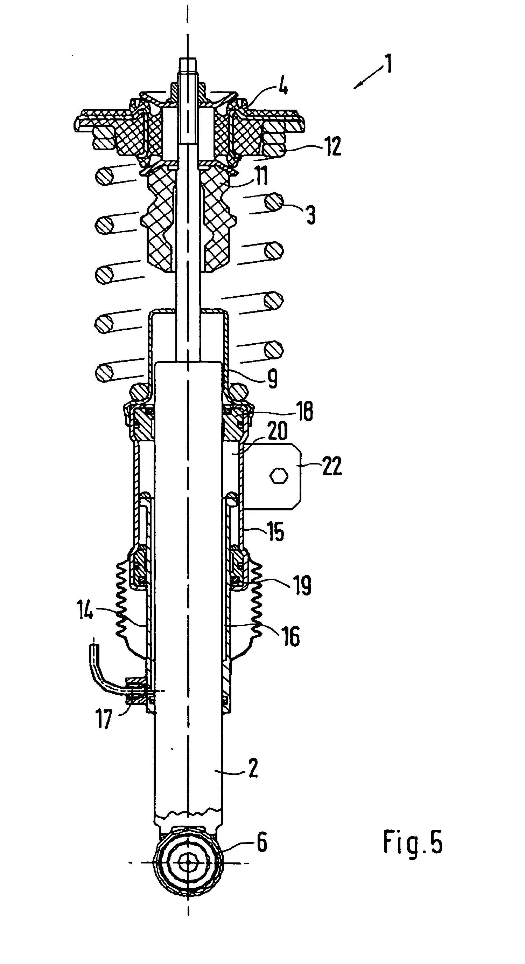

In Fig. 5 ist eine alternative Ausführungsform des Federbeines 1 dargestellt; soweit die Elemente dieses Federbeines des Elementen des Federbeines nach dem ersten Ausführungsbeispiel entsprechen, sind sie mit denselben Bezugszeichen gekennzeichnet.

Das dargestellte Federbein 1 weist gegenüber dem Federbein nach dem ersten Ausführungsbeispiel vor allem folgende Unterschiede auf:
- das zweite Federelement 12 ist oberhalb des ersten Federelementes 3 angeordnet.
- eine am Aktuator 15 befestigte Lasche 22 dient zur Anbindung eines nicht dargestellten, an sich bekannten Stabilisators.

## Patentansprüche

1. Verstellbares Federbein für Kraftfahrzeuge bestehend aus einem Schwingungsdämpfer (2) mit einem den Schwingungsdämpfer umgebenden Federelement (3), wobei sich das Federbein (1) zwischen zwei Anlenkpunkten (4, 6) erstreckt, am ersten Anlenkpunkt (4) der Schwingungsdämpfer und das Federelement gemeinsam abgestützt sind, am zweiten Anlenkpunkt (6) nur der Schwingungsdämpfer abgestützt ist, während das Federelement am zweiten Anlenkpunkt über den Schwingungsdämpfer mittels einer durch eine Stellvorrichtung (13) verschiebbaren Federauflage (8) abgestützt ist, **dadurch gekennzeichnet, daß** mit der verschiebbaren Federauflage (8) ein Anschlag (9) verbunden ist, der bei einer Einfederbewegung des Federbeines (1) am ersten Anlenkpunkt (4) zur Anlage kommt.

2. Verstellbares Federbein nach Anspruch 1, **dadurch gekennzeichnet, daß** die Anbindung eines Stabilisators an der Federauflage (8) oder einem mit der Federauflage (8) verbundenen Teil (15) der Stellvorrichtung (13) verbunden ist.

3. Verstellbares Federbein nach Anspruch 1 oder 2, **dadurch gekennzeichnet, daß** zwischen der Stellvorrichtung (13) und der Federauflage (8) ein zweites Federelement (12) vorgesehen ist, das so ausgelegt ist, daß das Federelement (12) in Konstruktionslage des Federbeines (1) auf Block liegt.

## Claims

1. An adjustable shock-absorbing leg for motor vehicles, consisting of a vibration damper (2) with a spring element (3) which surrounds the vibration damper, wherein the shock-absorbing leg (1) extends between two articulation points (4, 6), the vibration damper and the spring element are jointly supported on the first articulation point (4), but only the vibration damper is supported on the second articulation point (6), whilst the spring element is supported on the second articulation point by way of the vibration damper by means of a spring seat (8) which is displaceable by a setting apparatus (13), **characterized in that** a stop (9), which comes to rest against the first articulation point (4) during a compression movement of the shock-absorbing leg (1), is connected to the displaceable spring seat (8).

2. An adjustable shock-absorbing leg according to Claim 1, **characterized in that** the mounting of a stabilizer is connected to the spring seat (8) or a part (15) of the setting apparatus (13) connected to the spring seat (8).

3. An adjustable shock-absorbing leg according to Claim 1 or 2, **characterized in that** a second spring element (12), which is designed in such a way that the spring element (12) rests on the block in the construction position of the shock-absorbing leg (1), is provided between the setting apparatus (13) and the spring seat (8).

## Revendications

1. Jambe de suspension réglable pour véhicules automobiles, composée d'un amortisseur de vibrations (2) avec un élément à ressort (3) entourant l'amortisseur de vibrations, la jambe de suspension (1) s'étendant entre deux points d'articulation (4, 6), l'amortisseur de vibrations et l'élément à ressort étant supportés en commun au premier point d'articulation (4), seul l'amortisseur de vibrations étant supporté au deuxième point d'articulation (6), alors que l'élément à ressort est supporté au deuxième point d'articulation par l'intermédiaire de l'amortisseur de vibrations au moyen d'une butée de ressort (8) pouvant être déplacée par un dispositif de réglage (13), **caractérisée en ce que** la butée de ressort (8) mobile est associée à un taquet (9) qui vient en butée contre le premier point d'articulation (4) lors d'un mouvement de compression du ressort de la jambe de suspension (1).

2. Jambe de suspension réglable selon la revendication 1, **caractérisée en ce que** la liaison d'un stabilisateur est reliée à la butée de ressort (8) ou à une pièce (15) reliée à la butée de ressort (8) du dispositif de réglage (13).

3. Jambe de suspension réglable selon la revendication 1 ou 2, **caractérisée en ce qu'**entre le dispositif de réglage (13) et la butée de ressort (8), un deuxième élément à ressort (12) est prévu qui est conçu de telle sorte qu'en position de construction de la jambe de suspension (1), l'élément à ressort (12) est posé sur cale.
